# EUROPEAN PATENT APPLICATION

(11) **EP 2 876 265 A1**
(43) Date of publication of application: **27.05.2015**
(21) Application number: 13822579.2
(22) Date of filing: 11.07.2013
(51) Int. Cl.: F01K 1/04, F01K 1/08, F01K 1/12, F01K 3/14, F01K 13/00, F03G 6/00, F03G 6/06

(54) **METHOD FOR OPERATING A THERMOELECTRIC SOLAR PLANT**

(30) Priority: 23.07.2012 ES 201200750
(71) Applicant: Abengoa Solar New Technologies, S.A., 41014 Sevilla (ES)
(72) Inventor: OLAVARRÍA RODRÍGUEZ-ARANGO, Rafael, 41014 - Sevilla (ES); MÉNDEZ MARCOS, José María, 41014 - Sevilla (ES); DIAGO LÓPEZ, Maite, 41014 - Sevilla (ES)
(74) Representative: Garcia-Cabrerizo y del Santo, Pedro Maria
(86) International application number: PCT/ES2013/000171
(87) International publication number: WO 2014/016448

(57) **Abstract**

**SUMMARY**

Method of operating a solar thermoelectric power plant that allows operation of high-, medium- and low-pressure superheating turbines with both superheated steam and saturated steam. The plant needs to have energy storage in high-pressure steam tanks. The method described allows the direct introduction of saturated steam into a superheated steam turbine. This steam receives an intermediate reheating between the high-pressure turbine and the low- and medium-pressure turbines to achieve conditions of superheated steam.

The mode of operation proposed in the invention facilitates the operation of the plant in periods without sunshine (during transient periods, such as passing clouds or night time) or during discharge of accumulators (saturated steam tanks at high-pressure).

## Description

### Field of the Invention

The invention pertains to the field of methods of operation at thermoelectric solar plants and within these methods those specially designed to make use of the plant even when there is no sunshine (transient or night periods).

### Background of the Invention

There are several possible classifications for the steam turbines. One depends on the type of steam for which they have been designed, such as saturated steam turbines or superheated steam turbines. The other depends on the steam pressure at the turbine inlet. If the cycle has two turbines, the first will be high-pressure and the second will be low-pressure. If there is also an intermediate turbine, it is to be called medium-pressure. These two classifications are therefore independent and all the possible combinations exist between them, such as high-pressure superheated steam turbines or high-pressure saturated steam turbines.

The difference between superheated steam and saturated steam turbines is construction-related and notable, because internally they differ in important ways in terms of material, size, length and orientation of the blades and even in the size of these turbines (being higher in superheated steam turbines than in the saturated steam turbines at the same mass flow). The first blades of the superheated steam turbines are designed to withstand very high temperatures while the last blades are designed to prevent damage when the steam starts to have humidity (as occurs with saturated vapour). For saturated steam turbines the humidity is higher in all the blades, so that this is taken into account in the manufacturing material, especially in the last crowns where the blades are reinforced with layers of chromium. For this reason, until now if a cycle used saturated steam, it was imperative to use saturated steam turbines and if it used superheated steam, it was necessary to use superheated steam turbines.

As a result, when until now the literature described a specific power cycle, the turbines tended to be designated by the inlet pressure of the steam (high-, medium- or low-pressure), obviating in many cases the designation according to the steam type that feeds them as this is implied by the properties of the fluid.

In power cycles in which the inlet fluid to the high-pressure turbine is superheated steam, it is common to superheat the high- and low-pressure (or medium-pressure) turbines, although at the outlet of the high-pressure turbine, the steam continues to have a minimum superheating. This is done because the cycle efficiency is increased significantly as the superheating of the steam is increased (higher temperature and higher pressure in the steam increases the enthalpy difference in expansion and therefore the thermal efficiency of the Rankine cycle).

Several different patents feature different optimised Rankine cycle configurations in order to increase the efficiency of said cycle. These patents are detailed below.

The US20100071366 patent involves the generation of saturated steam, solar superheating and the sending of this superheated steam to a superheated steam turbine. It mentions the possibility of sending the saturated steam directly to the turbine, but that this would require changing the turbine to a saturated steam turbine, since the superheated steam turbine could not be used.

In the cycle in the US20090260359 (A1) patent, superheated steam is generated and sent to a high-pressure turbine. The steam at the outlet of this turbine is reheated with solar input and sent to the low-pressure turbine. The possibility of sending the steam directly to the low-pressure turbine without passing through the superheater is also mentioned. Since in both modes of operation described both turbines always receive superheated steam, the turbines used are superheated steam turbines, for the construction-related reasons explained above.

In the WO2011119413 (A2) patent, the turbines are fed only with superheated steam. A heat transfer fluid is used to superheat the steam prior to its introduction into the high-pressure turbine, and it is reheated before being placed into the low-pressure turbine.

In the US5754613 patent, a steam cycle for a nuclear power plant is proposed. In this cycle, saturated steam is fed into a high-pressure turbine, at the outlet of which this steam is superheated in a reheater in order to feed a low-pressure turbine with superheated steam. In the cycle described in the US20060248897 (A1) patent, only superheated steam is used. This is a combined cycle, in the steam cycle of which the high-pressure turbine is fed with steam that has been superheated with the exhaust fumes. After expanding in this turbine, the steam is superheated again using gas in order to introduce it into the low-pressure turbine.

As in the previous patent, in the cycle described in the US5111662 (A) patent, only superheated steam is used. This is also a combined cycle, in the steam cycle of which the high-pressure turbine is fed with steam that has been superheated with the exhaust fumes from the gas cycle. After expanding in this turbine, the steam is superheated again using gas in order to introduce it into the low-pressure turbine.

The different configurations proposed in these patents, which are applicable to all types of electricity generating plants (including solar plants), feature high-pressure turbines into which either saturated or superheated steam enters (normally with over 100°C of superheating). However, in none of the patents is the possibility mentioned of feeding the same turbine with both types of steam depending on the operating mode, but rather that the same turbine is always powered with saturated steam or superheated steam. In the US20100071366 patent, in which the option to feed the turbine with saturated steam instead of superheated steam is presented, it is explained that for this operation the type of turbine would need to be changed.

In conventional power plants, the plant configuration is designed for only one of the steam conditions (either saturated or superheated) and the fuel is a controllable variable, so it is easy to generate steam which always has the same characteristics of pressure and temperature.

Thermoelectric solar power plants, however, need to adapt to the fact that the solar resource is limited, unlike conventional power plants where fuel is continuously available. To do this, it has different storage systems that allow operation during transient or night periods, when the solar resource is not available. It is well known that it is very inefficient to store energy in the form of superheated steam due to its high specific volume, which causes it to require a larger area for heat transfer, and that more expensive materials are required due to the high temperatures. For these reasons, it is advisable for energy to be stored either in the form of pressurised saturated liquid or using another fluid (typically molten salts).

One of the drawbacks to storing energy using another fluid is that it drives up the price and complicates the operation of the power generation plant due to the need to install new systems for the operation of said fluid (heat exchanger etc.). Moreover, since only steam can be generated in steam cycle turbines, if the stored energy is contained in another fluid, this energy needs to be re-transferred to the water to generate the steam which is to be sent to the turbine. This energy exchange between water and the other fluid always involves an inherent loss of energy (heat loss) and exergy (loss of pressure and temperature).

To avoid using the other fluid as a storage medium, it is possible to store the excess energy as pressurised saturated liquid.

Since the storage is performed on pressurised saturated liquid and the target cycle is a high efficiency cycle, a Rankine cycle at high pressures and temperatures (superheated steam turbine), until now solutions and possible ways of using this type of storage efficiently and easily have been sought.

One example of how to efficiently perform this use is described in the ES 2350221 patent. The saturated liquid is stored at high pressure (typically 100 bar) and is expanded and cooled (typically to 40 bar and 250°C) resulting in saturated steam, which is then superheated to the minimum superheat degree required by the turbine until a stream of about 40 bar and 300°C is obtained. The heat for superheating is provided by another stream of saturated steam at around 100 bar and 310°C, also from the same storage system. With the configuration described above, the cycle efficiencies achieved with the conditions indicated are about 35% during the accumulator discharge stage (unloading of storage tanks), because the stream entering the high-pressure turbine is only about 40 bar and the stream flowing into the medium-pressure turbine is about 8 bar. In addition, the system operation in this mode is quite complex since it is necessary to superheat the stream entering the high pressure turbine and then the outlet stream if its entry is desired later in a medium- or low-pressure turbine.

Therefore, the present invention aims to provide a less complex method of operation, and also raise cycle efficiency above 30% during the accumulator discharge stage. For this, saturated steam will be used directly from the high-pressure superheated steam turbine.

### Description of the Invention

The invention consists of a method of operating a thermoelectric solar power plant that allows operation of the high-, medium- and low-pressure superheating turbines with both superheated steam and saturated steam. The plant has to have energy storage tanks (also called accumulators) of saturated liquid at high pressure.

As mentioned above, in thermoelectric solar power plants for electricity generation, being able to generate superheated steam and saturated steam in the same plant would reduce costs and solve many operational and optimisation-related problems because it is possible to store the required energy in the form of pressurised saturated fluid (capable of feeding accumulators with both superheated and saturated steam), without needing to use other fluids which, although they allow the generation of superheated steam, complicate the operation of the plant, increasing its costs and decreasing the overall yields since in each heat transfer from one fluid to another there are always energy losses.

This invention describes the method of operation of a thermoelectric solar power plant that has at least one superheated steam turbine and preferably two or three turbines (of high-and low-pressure or high-, medium- and low-pressure), with at least the high pressure turbine using superheated steam.

It also offers saturated steam generation solar power systems, superheated steam generation solar power systems, a solar reheater or the use of input from a conventional source (an intermediate plant between a high- and low-pressure turbine which enables us to raise the steam temperature at the outlet of the high-pressure turbine) and a set of storage tanks (accumulators).

The plant configuration described here is based on a Rankine superheated steam cycle. The method of operation under normal conditions, i.e. when operating with sunshine, causes the high-pressure turbine inlet (typically over 100 bar) to have superheated steam temperatures above 500°C. At the outlet of the high-pressure turbine, slightly superheated steam is obtained (typically about 20-25 bar) which is taken to the reheater (where again power is lost to the fluid burning the fuel or with the solar field) to bring the fluid back up to 500°C or more. The fluid in these conditions is taken to the medium- and low-pressure turbine to produce electricity after being optimally expanded to a pressure of about 100 mbar.

The operation method proposed below refers to the mode of operation of storage discharge, i.e. transient operation (clouds) or absence of sunshine (night time). The new operating configuration proposes generating saturated steam directly in the high-pressure superheated steam turbine at a pressure of 20 bar or higher and temperature corresponding to that of the water saturation at the given inlet pressure (preferably 90 bar and 300°C) coming from the storage system. Prior to entering the high-pressure superheated steam turbine, the saturated steam is passed through a moisture separator. The outlet stream of the high-pressure turbine is at a lower pressure than the inlet stream (preferably 20 bar or higher) and with some moisture (saturation state). This stream could be taken to a medium-pressure saturated steam turbine or superheated in a reheater to temperatures between 280 and 350°C, depending on the pressure in the storage tanks, and introduced into a medium-pressure superheated steam turbine to produce electricity. Superheating is performed by exchanging heat in a reheater with another saturated steam stream at the same pressure or higher than the inlet stream of saturated steam into the high-pressure superheated steam turbine, so that the final superheating obtained is at least 50°C (superheating stream pressures of preferably 90 bar or higher). In the event that said steam stream should proceed from the storage system, the choice of the superheating temperature is a function of the pressure of saturated liquid in the storage tanks, since this pressure in turn determines the pressure (and temperature) of the steam stream with which the steam sent to the second turbine is superheated. In this case, the saturated steam stream with which it is superheated is at a lower pressure than the pressure inside the tank. Another possibility for this superheating is the use of an auxiliary boiler.

Finally, the steam leaving the medium-pressure turbine may be taken to a low-pressure saturated or superheated steam turbine.

The advantages provided by the method of operation proposed for thermoelectric solar power plants are:
- In normal mode of operation it allows very energetic harnessing of superheated steam (e.g. at 550°C) generated in the solar field or via burning fuel during normal operation with yields above 40% and at night harnessing the saturated steam (stored in tanks at high-pressure in the form of saturated liquid preferably at more than 90 bar) with high cycle yields (around 35%), given that the higher the steam pressure, the better the cycle performance.
- It allows the harnessing of saturated steam when a transient period or lack of energy input occurs, by using input from the saturated steam or the accumulators or from the reboiler (if saturated steam is generated in a boiler there is always an inertia in it that can generate saturated steam a few minutes after the cessation of the energy input) so that the turbine does not stop abruptly.
- The use of another fluid to store energy is avoided, thus avoiding the energy losses that occur when it is necessary to have a fluid-water heat exchanger, it being possible with this method to directly harness the saturated steam stored as saturated liquid.
- The operation in accumulator discharge mode is simplified as it is reheated only once instead of twice as occurred until now, with storage in high-pressure saturated liquid tanks (until now it was reheated before the inlet to the high-pressure turbine and before the inlet to the medium- or low-pressure turbine).

This new method of operation optimises the cost of the plant, cycle efficiency and the operation of the plant when operating under normal conditions and when harnessing the steam coming from the storage system or during the operation in solar mode with transient periods.

### Description of the Drawings

To complement the preceding description and in order to aid a better understanding of it, a set of drawings has been attached which, as a non-limiting illustration, show the following:
Figure 1: Plant configuration in state-of-the-art normal operation (with sunshine)
Figure 2: Plant configuration in operation without sunshine (night time or accumulator discharge mode or transient periods).

With the following references:
1- Inlet stream to high-pressure turbine
2- Outlet stream from high-pressure turbine
3- Inlet stream to medium-pressure turbine
4- High-pressure superheated steam turbine.
5- Medium-pressure superheated steam turbine.
6- Low-pressure superheated steam turbine.
7- Reheater
8- Storage tanks or accumulators with high-pressure saturated liquid
9- Moisture separator
10- Solar reheater
11- Superheated steam receiver
12- Reboiler
13- Evaporators
14- Condenser
15- Condensate storage tank
16- Valves

### Preferred Embodiment of the Invention

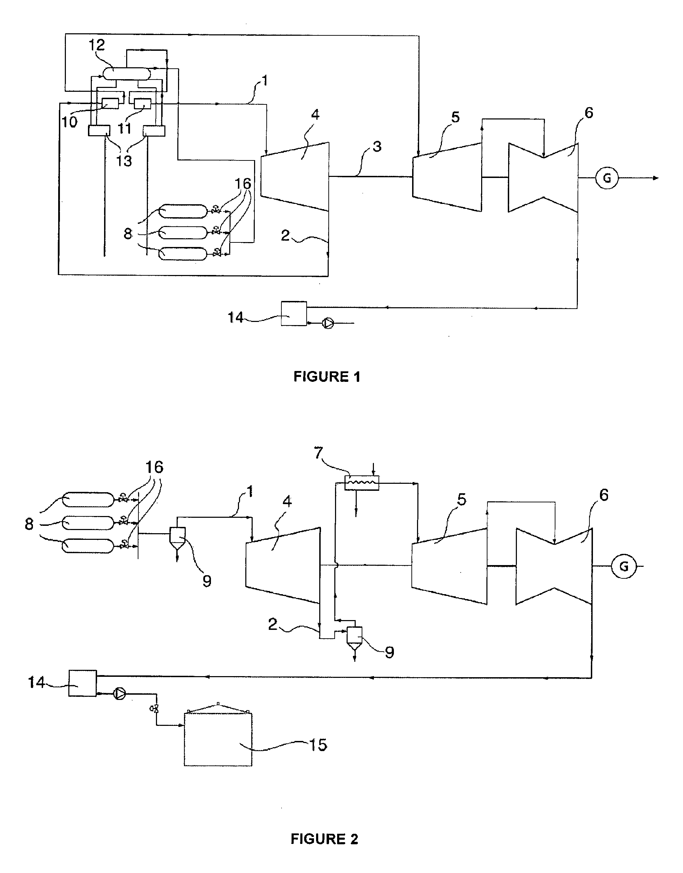

To achieve a better understanding of the invention, below is a description of two modes of operation for a tower thermoelectric solar plant. First, normal plant operation is described, i.e. operation in periods with sunshine, reflected in Figure 1. Next, the mode of operation proposed in this invention is described and shown in Figure 2, involving the operation of the plant in periods without sunshine (during transient periods, such as passing clouds or at night time) or during the discharge of accumulators (saturated liquid tanks at high pressure).

This preferred embodiment is a tower thermoelectric solar plant of 400MWe.

The method of normal operation, namely with sunshine, of a state-of-the-art plant as shown in Figure 1 involves:
- Outlet of saturated steam from the reboiler (12) to the superheated steam receiver (11) with part of this being able to be sent to accumulators (8)
- The steam (1) from the superheated steam receiver (11) is sent to the high-pressure superheated steam turbine (4)
- The steam (2) leaving the high-pressure turbine (4) is sent to the solar reheater (10)
- The steam leaving the solar reheater (10) is sent to the medium-pressure superheated steam turbine (5).
- The steam leaving the medium-pressure turbine (5) is sent to the low-pressure superheated steam turbine (6).
- The steam leaving the low-pressure turbine (6) is sent to the condenser (14).

As for the method of the invention, the general steps, taking into account that there is at least one high-pressure superheated steam turbine, are:
- Storage of high-pressure saturated liquid in tanks (8) and pressure reduction in the line between the tank (8) and turbine (4) via a valve for the production of saturated steam, or by supplying saturated steam from a reboiler (12),
- the saturated steam is passed through a moisture separator (9) to remove the drops,
- discharge of saturated steam (1), introducing it into the high-pressure superheated steam turbine (4),
- expansion of the steam in the turbine (4), thus generating electricity

If there is also a medium-pressure superheating turbine:
- the steam is passed through a moisture separator (9) to remove the drops,
- superheating of steam,
- the superheated steam is introduced into the medium-pressure superheated steam turbine (5),
- the steam expands in the turbine (5) generating electricity, moving towards the outlet as saturated steam

If instead of being superheated, the medium-pressure turbine uses saturated steam, the superheating stage would be avoided, leaving the following:
- the steam is passed through a moisture separator (9) to remove the drops,
- the saturated steam is introduced into the medium-pressure saturated steam turbine (5),
- the steam expands in the turbine (5) generating electricity, moving towards the outlet as saturated steam.

If, in addition, the plant has a low-pressure turbine following the medium-pressure turbine, the last stages would be:
- inlet of the saturated steam to the low-pressure turbine (this could be for saturated or superheated steam)
- outlet from the low-pressure turbine and
- inlet of the steam to the condenser (14) and this water is reused in the plant.

Below is a description of a preferred operating method in the absence of sunshine or during accumulator discharge, with the aid of Figure 2:
- Saturated liquid is stored in tanks (8) at 130 bar pressure and 330°C
- Pressure reduction at the outlet from the accumulators from the pressure in each tank (8) at 92.2 bar through the adjustment of a valve (16) located at the outlet of the tanks (8), thus providing saturated steam.
- The saturated steam is passed through a moisture separator (9) to remove the drops that could damage the superheated turbine
- Inlet of saturated steam (1), in the high-pressure superheated steam turbine (4) at 92.2 bar and 305°C (saturation temperature for that pressure)
- Expansion in the turbine (4), thus generating electricity
- Outlet of the steam (2) from the high-pressure superheated steam turbine (4) at 26.7 bar and 227.5°C, which is passed through a moisture separator (9) to remove the drops that could damage the superheated turbine (5)
- Inlet of steam into the reheater (7), in which it is superheated to 302.5°C after exchanging energy with another stream of saturated steam at 95 bar from another (or the same) storage tank (8).
- The superheated steam at 302.5°C and 23.9 bar is introduced into the medium-pressure superheated steam turbine (5)
- The steam expands in the medium-pressure superheated steam turbine (5) generating electricity, moving towards the outlet as saturated steam
- The steam is passed through a moisture separator (9) to remove the drops
- Inlet of the saturated steam into the low-pressure superheated steam turbine (6) at 140.7°C and 3.7 bar
- Outlet from the latter turbine (6) at a pressure of 13 mbar
- Inlet of steam into the condenser (14) and reuse of water at the plant, passing through the condensate storage tank (15).

Thus, during the operation mode saturated steam is introduced from accumulators into superheated steam turbines which in normal operation mode receive superheated steam.

## Claims

1. Method of operation of a thermoelectric solar power plant during accumulator discharge where the plant in question is made up of saturated steam storage tanks, and at least one high-pressure superheated steam turbine, and which comprises the following stages :
□ Storing of high-pressure saturated liquid in tanks (8) and reduction of pressure in the line between the tank (8) and turbine (4) via the valve for the production of saturated steam, or by supplying saturated steam from a reboiler (12),
- the saturated steam is passed through a moisture separator (9) to remove the drops,
- discharge of saturated steam (1), introducing it into the high-pressure superheated steam turbine (4),
- expansion of the steam in the turbine (4), thus generating electricity

2. Method of operation of a thermoelectric solar power plant according to claim 1 wherein the plant, besides the high-pressure superheated steam turbine, has a medium-pressure superheated steam turbine (5) and after the expansion of the steam in the high-pressure turbine (4):
- the steam is passed through a moisture separator (9) to remove the drops,
- the steam is superheated,
- the superheated steam is introduced into the medium-pressure superheated steam turbine (5),
- the steam expands in the turbine (5) generating electricity, moving towards the outlet as saturated steam

3. Method of operation of a thermoelectric solar power plant according to claim 1 wherein the medium-pressure turbine uses saturated steam and after the expansion of the steam in the high-pressure turbine (4):
- the steam is passed through a moisture separator (9) to remove the drops,
- the saturated steam is introduced into the medium-pressure saturated steam turbine (5),
- the steam expands in the turbine (5) generating electricity, moving towards the outlet as saturated steam.

4. Method of operation of a thermoelectric solar power plant according to claim 2 or 3 wherein the plant comprises a low-pressure saturated steam turbine and after the expansion of the steam in the medium-pressure turbine (5):
- inlet of saturated steam to the low-pressure saturated steam turbine,
- outlet from the low-pressure turbine and
- inlet of the steam to the condenser (14).

5. Method of operation of a thermoelectric solar power plant according to claim 2 or 3 wherein the low-pressure turbine uses superheated steam and after the expansion of the steam in the medium-pressure turbine (5):
- inlet of saturated steam to the low-pressure superheated steam turbine,
- outlet from the low-pressure turbine and
- inlet of the steam to the condenser (14) and this water is reused in the plant.

6. Method of operation of a thermoelectric solar power plant according to claim 1 wherein the high-pressure superheated steam turbine directly harnesses the saturated steam at 20 bar or more.

7. Method of operation of a thermoelectric solar power plant according to claim 2 wherein the steam is superheated in a reheater up to temperatures of between 280 and 350°C.

8. Method of operation of a thermoelectric solar power plant according to claim 5 wherein
- saturated liquid is stored in tanks at 130 bar of pressure and is reduced from the pressure in the tank to 92.2 bar by adjusting a valve located in the line between the tank and turbine for the production of saturated steam, or by supplying saturated steam from the reboiler,
- the steam is passed through a moisture separator (9) to remove the drops
- discharge of saturated steam, introducing it into the high-pressure superheated steam turbine at 92.2 bar and 305°C (saturation temperature for that pressure),
- expansion in the turbine, thus generating electricity
- outlet of the steam from the high-pressure turbine at 26.7 bar and 227.5°C
- the saturated steam is passed through a moisture separator to remove the drops that could damage the superheated turbine,
- inlet of the steam into the storage reheater, in which it is superheated to 302.5°C after exchanging energy with another saturated steam stream at 95 bar from another (or the same) storage tank,
- the superheated steam at 302.5°C and 23.9 bar is introduced into the medium-pressure superheated steam turbine,
- as for the high-pressure turbine, the steam expands generating electricity, moving towards its outlet as saturated steam, inlet of saturated steam to the low-pressure superheated steam turbine at 140.7°C and 3.7 bar,
- outlet from the latter turbine at a pressure of 13 mbar
- inlet of the steam into the condenser and this water is reused in the plant.
